# EUROPÄISCHE PATENTSCHRIFT

(11) **EP 1 940 339 B1**
(45) Veröffentlichungstag und Bekanntmachung des Hinweises auf die Patenterteilung: **21.12.2011**
(21) Anmeldenummer: 06804812.3
(22) Anmeldetag: 17.10.2006
(51) Int. Cl.: A61K 6/00, A61K 9/00

(54) **DENTALIMPLANTAT UND VERFAHREN ZU DESSEN HERSTELLUNG**
DENTAL IMPLANT AND PRODUCTION METHOD FOR SAID IMPLANT
IMPLANT DENTAIRE ET PROCEDE DE FABRICATION

(30) Priorität: 27.10.2005 CH 17232005
(43) Veröffentlichungstag der Anmeldung: 09.07.2008
(73) Patentinhaber: THOMMEN MEDICAL AG, 4437 Waldenburg (CH)
(72) Erfinder: SCHLOTTIG, Falko, CH-4414 Füllinsdorf (CH); SCHNABELRAUCH, Matthias, 07749 Jena (DE); KAUTZ, Armin, Rex, 07745 Jena (DE)
(74) Vertreter: Bremi, Tobias Hans
(86) Internationale Anmeldenummer: PCT/CH2006/000577
(87) Internationale Veröffentlichungsnummer: WO 2007/048264

(56) Entgegenhaltungen:
- WO-A-01/13922
- WO-A-94/14455
- WO-A-2005/094784

## Beschreibung

### TECHNISCHES GEBIET

Die vorliegende Erfindung betrifft ein Dentalimplantat, welches wenigstens bereichsweise in im implantierten Zustand mit Hart- und/oder Weichgewebe in Kontakt befindlichen Oberflächenbereichen eine Beschichtung aufweist.

### STAND DER TECHNIK

Verletzte oder beschädigte Teile des Hart- und/oder Weichgewebes des menschlichen Körpers werden am Besten wiederhergestellt, indem körpereigenes Hart- und/oder Weichgewebe verwendet wird. Dies ist aus verschiedenen Gründen nicht immer möglich, und daher kommt in vielen Fällen synthetisches Material als temporäres (bioabbaubares respektive postoperativ entfernbares) oder permanentes Ersatzmaterial zum Einsatz.

Derzeit werden verschiedenste Implantate zum Einsetzen in Hart- und/oder Weichgewebe verwendet. Zu den kleineren Implantaten, die seit vielen Jahren im erfolgreichen klinischem Einsatz sind, zählen Dentalimplantate, die in den Kiefer eingebracht werden, um künstliche Zähne oder Prothesen aufzubauen oder zu befestigen.

Für die Implantatverankerung und die Implantatverträglichkeit an der Grenzfläche Implantatoberfläche / angrenzendes Gewebe hat die Dentalimplantatoberfläche eine grosse Bedeutung. Durch eine Veränderung der Dentalimplantatoberfläche kann der Heilungsprozess beschleunigt werden.

Zur Oberflächenbehandlung und Oberflächenstrukturierung werden verschiedenste Methoden verwendet, siehe z.B. Titanium in Medicine, Material Science, Surface Science, Engineering, Biological Responses and Medical Applications Series: Engineering Materials, (Brunette, D.M.; Tengvall, P.; Textor, M.; Thomsen, P.(Eds.)); und die darin genannten Referenzen.

Gut etabliert ist beispielsweise die Erhöhung der Rauhigkeit (für viele vgl. Titanium in Medicine, Material Science, Surface Science, Engineering, Biological Responses and Medical Applications Series: Engineering Materials, (Brunette, D.M.; Tengvall, P.; Textor, M.; Thomsen, P. (Eds.)).

Weiterhin gibt es Arbeiten, welche die chemische Modifikation von Dentalimplantatoberflächen beschreiben, um eine bessere Anbindung des Knochens an die Dentalimplantatoberfläche zu erzielen (z.B. D. Buser, N. Broggini, M. Wieland, R. Schenk, A. Denzer, D. Cochran, B. Hoffmann, A. Lussi, S. Steinemann, J.Dent.Res. 83 (7): 529-533, 2004).

Neuere Ansätze sind pharmazeutische Modifikationen der Oberfläche, um die Osseointegration des Dentalimplantates zu beschleunigen und/oder die Regeneration des umliegenden Hart und/oder Weichgewebes zu fordern oder zu stimulieren, beispielsweise mit Wachstumsfaktoren.

Andere für pharmazeutische Oberflächenmodifikation interessante Medikamentgruppen sind Pharmazeutika, die zur systemischen Behandlung von Osteoporose entwickelt wurden, wie beispielsweise Calcitonin, Strontiumranelat und verschiedene Bisphosphonate.

Bisphosphonate können als Strukturanaloga des Pyrophosphats aufgefasst werden, bei denen die P-O-P-Gruppierung durch eine enzymatisch stabile P-C-P-Gruppierung ersetzt ist. Durch Substitution der Wasserstoffatome am C-Atom der P-C-P-Gruppierung sind Bisphosphonate mit unterschiedlichen Strukturelementen und Eigenschaften zugänglich. Bekannte, zur klinischen Anwendung zugelassene Bisphosphonate sind beispielsweise Pamidronsäure, Alendronsäure, Ibandronsäure, Clodronsäure oder Etidronsäure. In der Medizin haben sich Bisphosphonate zur Behandlung von metabolischen Knochenerkrankungen, insbesondere Tumorassoziierten Hypercalcämien, osteolytischen Knochenmetastasen sowie postmenopausalen und glucocorticoinduzierten Osteoporosen etabliert. In Abhängigkeit von ihrer Struktur unterscheiden sich die bekannten Bisphosphonate zum Teil deutlich in ihrer therapeutischen Wirksamkeit. Eine hohe therapeutische Wirkung besitzen insbesondere solche Bisphosphonate, die in der Struktureinheit zwischen den beiden Phosphoratomen eine Amino-Funktion besitzen. Im folgenden werden diese Verbindungen als Amino-Bisphosphonate bezeichnet.

Die pharmakologische Wirkung der Bisphosphonate beruht auf einer hohen Affinität zu Calciumphosphat-Strukturen der Knochenoberfläche, in deren Folge knochenabbauende Zellen (Osteoklasten) gehemmt werden, was zu einer Verminderung der Knochenresorption und gleichzeitig einer Reaktivierung knochenaufbauender Zellen (Osteoblasten) führt. Auf Grund der speziellen Pharmakokinetik der Bisphosphonate ist eine lokale Therapie der systemischen Gabe vorzuziehen.

Basierend auf diesem Kenntnisstand sind in den letzten Jahren zahlreiche Untersuchungen durchgeführt worden, in denen die Immobilisierung von ausgewählten Bisphosphonaten auf Hartgewebsimplantaten sowie deren Auswirkung auf das Einwachsverhalten des jeweiligen Implantats untersucht wurden.

So wurde beispielsweise in der US 5,733,564 die Beschichtung von Materialien (Endoprothesen, Schrauben, Stifte, etc.) mit wässrigen Bisphosphonat-Lösungen mit dem Ziel beschrieben, die Knochen-Neubildung um das Implantat zu beschleunigen. Die schlechte Haftung der Bisphosphonate auf Metalloberflächen und ihre Wasserlöslichkeit stellen jedoch einen Nachteil dieser Vorgehensweise dar.

Yoshinari et al. (Biomaterials 23 (2002), 2879-2885) zeigten an Hand von in vivo-Studien, dass Calciumphosphat-beschichtete Dentalimplantate aus Rein-Titan, die mit einer wässrigen Pamidronat-Lösung imprägniert wurden, eine verbesserte Osteogenese an der Dentalimplantatobeuläche aufwiesen, als nicht mit Pamidronat imprägnierte Implantate. Auf Grund der hohen Affinität der Bisphosphonate zu Calciumionenhaltigen Substraten stellen Calciumphosphat-Oberflächen ein mögliches Substrat für die Immobilisierung von Bisphosphonaten dar, da auf diesen Oberflächen die Bioverfügbarkeit der Bisphosphonate und damit ihre therapeutische Wirksamkeit durch Wechselwirkung mit Calcium-Ionen in höherem Masse gegeben ist, als auf weitgehend Calciumionen-freien Oberflächen.

Eine weitere Variante der Immobilisierung von Bisphosphonaten in Hydroxyapatithaltigen Beschichtungen von Knochenimplantaten beschreibt WO-A-02/04038. Da metallische Implantate im Hartgewebebereich eine dominierende Rolle spielen und andererseits eine Calciumphosphat-Beschichtung von Metalloberflächen erhöhte Fertigungsaufwendungen mit sich bringt, wurden in letzter Zeit zahlreiche Versuche unternommen, metallische Implantatmaterialien so zu modifizieren, dass auf ihnen eine wirksame Bisphosphonat-Immobilisierung ermöglicht wird.

So wurden Arbeiten bekannt, in denen Calciumionen mittels Elektronenstrahl-Implantation in die Oberfläche von Titanimplantaten eingebracht werden (JP 2000070288, H. Kajiwara et al. Biomaterials 26 (2005), 581-587), um eine verbesserte Anhaftung von Bisphosphonaten zu erzielen. Dieses Verfahren hat allerdings den Nachteil eines hohen apparativen Aufwandes.

Weitere Arbeiten beschäftigen sich mit der elektrolytischen Abscheidung von Calcium-Etidronat auf Reintitan (K. Duan et al. J. Biomed. Mater. Res.: Appl. Biomater. 72B (2005), 43-51), wobei zwar dünne Filme aus Bisphosphonat abgeschieden werden konnten, die jedoch Inhomogenitäten aufweisen und beim Trocknen Schrumpfungserscheinungen zeigten.

In WO-A-2005/018699 werden Bisphosphonat-beschichtete metallische Implantate beschrieben, die in der Weise hergestellt werden, dass zunächst eine Proteinschicht, beispielsweise aus Fibrinogen, auf die Metalloberfläche immobilisiert wird. An diese Proteinschicht, z.B. über freie Carboxylgruppen, werden anschliessend, z.B. über chemische Aktivierung der Carboxylgruppen, ein oder mehrere Bisphosphonate kovalent über reaktive funktionelle Gruppen gebunden. Ein wesentlicher Nachteil dieser Methode liegt in der Verwendung toxischer Reagenzien bei der Immobilisierung bzw. Vernetzung der Proteinschicht und der kovalenten Anbindung des Bisphosphonats.

Weiter sei auf die WO 2005/094784 A hingewiesen, welche bioadhäsive medizinische Lösungen beschreibt, die Bisphosphonate bzw. deren Salze in Verbindung mit Polyoxyethylen-sorbitanmonolaurat (Tween 20) oder ähnlichen Verbindungen enthalten, sowie deren Verwendung in der oralen Implantologie. In der Beschreibung dieses Dokumentes wird behauptet, dass durch die vorgeschlagene Lösung eine bessere Verfügbarkeit von Bisphosphonaten am Wirkort sowie eine verlängerte Wirksamkeit erzielt wird. Diese Effekte werden von den Autoren insbesondere durch eine gute Haftung (Bioadhäsivität) der Lösung sowohl auf der Implantatoberfläche als auch auf dem umgebenden Gewebe begründet und als Unterscheidungsmerkmal zum Stand der Technik angeführt. Das dieser Offenbarung zu Grunde liegende Prinzip besteht also in einer Angleichung der Oberflächeneigenschaften von Implantat und Gewebe (vgl. die angegebenen tensiometrischen Profile) durch den Zusatz einer oberflächenaktiven Substanz in Form von Polyoxyethylen-sorbitanmonolaurat wie z.B. Tween 20. Unter anderem wird in diesem Dokument, neben der Befeuchtung der Körperstelle der Implantierung, vorgeschlagen, ein Implantat mit der angegebenen Lösung anzufeuchten und im befeuchteten Zustand zu implantieren.

### DARSTELLUNG DER ERFINDUNG

Der Erfindung liegt demnach u.a. die Aufgabe zugrunde, ein verbessertes Dentalimplantat zur Verfügung zu stellen, welches z.B. eine gute sowie komplikationslose Osseointegration resp. Osteointegration zeigt, und welches dennoch in einem einfachen und kostengünstigen Verfahren hergestellt werden kann.

Eine Lösung dieser Aufgabe wird z.B. dadurch erreicht, dass das Dentalimplantat wenigstens bereichsweise in im implantierten Zustand mit Hart- und/oder Weichgewebe wenigstens mittelbar in Kontakt befindlichen Oberflächenbereichen eine Beschichtung aufweist. Wenigstens mittelbar in Kontakt bedeutet dabei, dass die Beschichtung direkt mit dem Hart- und/oder Weichgewebe in Kontakt sein kann, oder aber auch über Kanäle, Öffnungen und/oder eine weitere Schicht oder Schichten, welche aber die unten beschriebene Freisetzungscharakterisitk des Bisphosphonates nicht oder nur unwesentlich beeinflussen resp. ändern. Diese Beschichtung enthält sowohl wenigstens ein Amino-Bisphosphonat nach Anspruch 1, als auch wenigstens eine amphiphile Komponente und/oder eine wasserlösliche ionische polymere Komponente nach Anspruch 1.

Auch Mischungen von unterschiedlichen derartigen Amino-Bisphosphonaten sind möglich sowie Mischungen von unterschiedlichen amphiphilen Komponenten resp. wasserlöslichen ionischen polymeren Komponenten.

Als Substituenten für die Alkylgruppe von Y kommen auch kationische C2-C5 Ammoniumderivate in Frage wie z.B. N(CH₂CH₃)₃.

Y ist eine lineare C1- C7 Alkylgruppe substituiert durch NH₂, N(CH₃)₂, NH(CH₃), N(CH₃)₃, Pyridinyl oder Imidazolyl. Die amphiphile Komponente ist ein lineares unsubstituiertes C10-C20 Alkyl-Carboxylat oder Alkyl-Sulfat.

Einer der Kerne der Erfindung besteht somit darin, das Bisphosphonat, welches ohne spezifische Massnahmen infolge der grossen Löslichkeit in wässrigen Lösungen zu mobil ist und nach dem Einbau des Implantates zu schnell von der Oberfläche weggetragen würde, in einem Mischsalz mit einer zweiten Komponente zu mischen resp. zu binden, was dazu führt, dass dieses Mischsalz, welches in Wasser, und damit auch in der physiologischen Umgebung nach dem Einbau des Implantates, eine wesentlich niedrigere Löslichkeit aufweist, somit die Wirksamkeit über eine wesentlich längere Zeitdauer an der entscheidenden Grenzfläche ausüben kann. Es wird festgestellt, dass bei Verwendung der Beschichtung nach der Erfindung überraschenderweise die Verfügbarkeit des in der Beschichtung enthaltenden Bisphosphonates an der Implantatoberfläche beziehungsweise in der direkten Umgebung des Implantates während mehrerer Tage bis Wochen gewährleistet ist. Überraschenderweise lässt sich dies durch eine spezifische Auswahl von Zusatzkomponenten erreichen. Die amphiphile Komponente respektive das Bisphosphonat und die wasserlösliche ionische polymere Komponente liegen als Mischsalz ( die amphiphile Komponente ist ebenfalls ionisch) mit geringer Löslichkeit in Wasser, vor, und es zeigt sich, dass durch die Verwendung der spezifischen amphiphilen respektive wasserlöslichen ionischen polymeren Komponente eine erstaunlich gute Haftung des Bisphosphonates auf gängigen Dentalimplantat-Materialien erreichbar ist. Es handelt sich bevorzugtermassen bei der Beschichtung um eine trockene Beschichtung.

Im Gegensatz zum eingangs genannten Stand der Technik, welcher zum Beispiel wässrige Lösungen von Bisphosphonat zur Anwendung empfiehlt, beruht die vorliegende Erfindung somit auf der Überlegung, dass die Freisetzung eines niedermolekularen Wirkstoffs aus einer Implantatbeschichtung in das umgebende, im Falle eines Implantates wässrige Milieu, wesentlich durch seine Diffusion aus der trockenen Schicht in die Umgebung bestimmt wird, und dass diese Freisetzung wiederum von der Löslichkeit des Wirkstoffs im umgebenden wässrigen Medium bestimmt wird. Bisphosphonate, sind in der Regel gut wasserlösliche Verbindungen, so dass mit einer schnellen Diffusion aus einer Anfeuchtung und gleichermassen aus einer trockenen Beschichtung und damit mit einer geringen Retardierung des Wirkstoffs am Wirkort zu rechnen ist. Es ist deshalb einer der Kerngedanke der vorliegenden Erfindung, den ursprünglich bereits schon als Lösung oder in einer leicht löslichen Salzform vorliegenden und auf diese Weise entsprechend dem Stand der Technik eingesetzten Wirkstoff in eine schwerlösliche Salzform in einer trockenen Schicht zu überführen. Die Verfügbarkeit des Wirkstoffs wird dann durch ein Löslichkeitsgleichgewicht zwischen ursprünglichem freien Wirkstoff und dem in Form eines unlöslichen Salzes vorliegenden Wirkstoff bestimmt. Wenn nun im wässrigen Medium der entsprechend des Löslichkeitsprodukts des schwerlöslichen Wirkstoffsalzes frei verfügbare Wirkstoffe aus der Beschichtung heraus diffundiert, verschiebt sich das Gleichgewicht zu Gunsten des freien Wirkstoffs und es erfolgt auf diese Weise eine allmähliche Freisetzung des Wirkstoffs aus dem schwerlöslichem Wirkstoffsalz. Es ist mit anderen Worten, dem Diffusionsgleichgewicht ein Löslichkeitsgleichgewicht vorgelagert und das Herauslösen des Wirkstoffs aus dem schwerlöslichem Wirkstoffsalz löst die Diffusion als geschwindigkeitsbestimmenden Schritt der Wirkstofffreisetzung ab. Voraussetzung für die Anwendung dieses Konzeptes ist die Fähigkeit der Bisphosphonate, in wässrigem Medium schwerlösliche Salze mit entsprechenden anionischen oder kationischen Reaktionspartnern, der erfindungsgemäss vorgeschlagenen amphiphilen ionischen respektive wasserlöslichen ionischen polymeren Komponente zu bilden.

In den genannten Salzen aus Amino-Bisphosphonaten und der amphiphilen ionischen, d.h. anionischen Komponente, spezifisch den langkettigen Alkan-sulfaten resp. - carboxylaten, bildet das jeweilige Bisphosphonat die kationische Komponente und die amphiphile ionische respektive wasserlösliche ionische polymere Komponente, spezifisch das jeweilige langkettige Carboxylat bzw. Alkansulfat, die anionische Komponente. Es wurde weiterhin gefunden, dass durch den gleichzeitigen oder nachträglichen Zusatz eines wasserlöslichen Salzes wie z.B. eines Calcium- oder Strontiumsalzes die Wasserlöslichkeit des betreffenden Salzes aus Amino-Bisphosphonaten und langkettigen Carbonsäuresalzen oder langkettigen Alkan-sulfaten weiter verringert werden kann. Erfindungsgemäss ist auch die Verwendung langkettiger Carbonsäuren sowie langkettiger Alkyl-Schwefelsäuren anstelle der entsprechenden wasserlöslichen Salzformen.

Der Erfindung liegt, wie bereits weiter oben erwähnt, weiterhin der überraschende Befund zugrunde, dass Amino-Bisphosphonate mit den beanspruchten wasserlöslichen ionischen Polymeren, die sich von an sich bekannten biologisch verträglichen (Bio-)Polymeren in Form von Polysacchariden ableiten, in Wasser gering lösliche Bisphosphonat-Polymer-Salze bilden, die ebenfalls auf nichtmetallischen oder metallischen Oberflächen haften, ohne dass weitere Schichtbildner oder ein Träger (Carrier) erforderlich sind. Die genannten Salze aus Amino-Bisphosphonaten und langkettigen Carbonsäuren oder langkettigen Alkan-sulfaten sowie die genannten Bisphosphonat-Polymer-Salze eignen sich als Beschichtungen für nichtmetallische oder metallische Oberflächen und setzen im wässrigen Medium Bisphosphonat retardiert frei.

Es ist z.B. erfindungsgemäss, dass die genannten Salze aus Amino-Bisphosphonaten und langkettigen Carbonsäuren oder langkettigen Alkan-sulfaten sowie die genannten Bisphosphonat-Polymer-Salze als feinverteilte Suspensionen aus Wasser oder leichtflüchtigen, organischen Lösungsmitteln, wie z. B. aus Chloroform oder Chloroform-Mischungen durch ein Beschichtungsverfahren, also beispielsweise durch Tauchen, Sprühen oder Tropfen auf nichtmetallischen oder metallischen Oberflächen aufgebracht werden können, wobei sie gut haftende Beschichtungen bilden.

Bei der Beschichtung handelt es sich um eine Beschichtung, welche ohne zusätzlichen Träger respektive zusätzlichen Carrier vorliegt. Mit anderen Worten besteht die Beschichtung im wesentlichen oder gar vollständig nur aus den genannten Mischsalzen. Dies vereinfacht die Herstellung derartiger Implantate wesentlich. Es zeigt sich nämlich überraschenderweise, dass die vorgeschlagenen Mischsalze im Gegensatz zu anderen Wirkstoffen direkt als Beschichtung aufgebracht werden können, und ein zusätzlicher spezifischer Träger oder ein Carrier nicht erforderlich ist.

Die Beschichtung kann in einem geeigneten Lösemittel durch Tauchen, Aufsprühen oder Auftropfen auf die zu beschichtende Oberfläche aufgebracht werden und nach Verdampfung oder Verdunstung des Lösemittels bildet sich durch in situ Salzbildung eine in Wasser gering lösliche bisphosphonat-haltige Beschichtung.

Die Beschichtung zeichnet sich also unter anderem bevorzugtermassen dadurch aus, dass sie nach Einsetzen in das menschliche oder tierische Gewebe respektive in den menschlichen oder tierischen Knochen das Bisphosphonat in verzögerter Weise über einen längeren Zeitraum an die unmittelbare Umgebung des Implantates abgibt respektive in der unmittelbaren Umgebung des Implantates Wirksamkeit entfaltet.

Gemäss einer ersten bevorzugten Ausführungsform verfügt die Mischung respektive das Mischsalz über eine Löslichkeit in reinem Wasser von weniger als 1 mg/ml bei Raumtemperatur, insbesondere bevorzugt im Bereich von 0.05 - 0.9 mg/ml bei Raumtemperatur.

Eine weitere bevorzugte Ausführungsfornn zeichnet sich dadurch aus, dass es sich beim Bisphosphonat um Pamidronsäure, Alendronsäure, Neridronsäure, Risedronsäure, Zoledronsäure, Olpadronsäure, Ibandronsäure, Minodronsäure oder Cimadronsäure oder eine Mischung und/oder Alkali- oder Erdalkali-Salze davon. Als besonders wirksam erweisen sich die bereits bekannten Komponenten Pamidronsäure und/oder Alendronsäure gegebenenfalls in Form des Alkali- oder Erdalkali-Salzes, so beispielsweise Natritun-Alendronat respektive Natrium-Pamidronat. Generell ist es bevorzugt, wenn das Bisphosphonat in der freien Phosphonsäure-Form, der Natrium-, Kalium-, Ammonium-, Calcium-, Magnesium- und/oder Strontium-Salzfonn vorliegt.

Es handelt sich bei der amphiphilen Komponente, welche im Mischsalz mit dem Bisphosphonat zu einer reduzierten Löslichkeit des Bisphosphonates Anlass gibt, um wenigstens eine Komponente ausgewählt aus der Gruppe der linearen unsubstituierten C10-C20 Alkyl-Carboxylate oder Alkyl-Sulfate respektive deren Alkali- oder Erdalkali-Salze, insbesondere bevorzugt um Laurat, Stearat, Palmitat, Myristat, Oleat, Behenat, Dodecylsulfat, bevorzugt als Alkali- oder Erdalkali-Salze oder Mischungen davon.

Bei der wasserlöslichen ionischen polymeren Komponente, welche im Mischsalz mit dem Bisphosphonat zu einer reduzierten Löslichkeit des Bisphosphonates Anlass gibt, handelt es sich erfindungsgemäss um eine polymere Komponente mit freien anionischen Gruppen, welche sich von biologisch verträglichen Biopolymeren ableitet. Es handelt sich um carboxylierte, carboxymethylierte, sulfatierte oder phosphorylierte Derivate natürlicher Polysaccharide, insbesondere bevorzugt von Polysacchariden ausgewählt aus Dextran, Pullulan, Chitosan, Stärke oder Cellulose oder Mischungen davon.

Vorzugsweise liegt das insbesondere bevorzugt als Amino-Bisphosphonat ausgewählte Bisphosphonat und die insbesondere bevorzugt als Alkylsulfat oder Alkylcarboxylat ausgewählte amphiphile Komponente in der Beschichtung in einem Molverhältnis zwischen 10 : 1 und 1 : 5 vor, insbesondere bevorzugt in einem Molverhältnis von 2:1 bis 1:2. Entsprechend liegt das als Amino-Bisphosphonat ausgewählte Bisphosphonat und die wasserlösliche ionische polymere Komponente in der Beschichtung bevorzugtermassen in einem Molverhältnis zwischen 10 : 1 und 1 : 5, insbesondere bevorzugt in einem Molverhältnis von 2:1 bis 1:2, jeweils bezogen auf die Aminogruppen des eingesetzten Aminogruppen-haltigen Bisphosphonats und die vorhandenen anionischen Gruppen der polymeren Komponente, vor.

Eine solche Beschichtung kann auf einer glatten, porösen und/oder aufgerauten Oberfläche aufgebracht sein. Die Oberflächenstruktur kann dabei über mechanische Verfahren (z.B. Sandstahlen) und/oder über chemische Verfahren (z.B. Säurebehandlung) hergestellt sein.

Grundsätzlich lässt sich diese Beschichtung auf Dentalimplantate nach dem Stand der Technik auftragen, so beispielsweise auf ein Dentalimplantat auf metallischer und/oder keramischer Basis. Es zeigt sich dabei, dass die Beschichtung nicht auf eine spezifische darunter liegende Schicht oder einen zusätzlichen Träger/Carrier angewiesen ist, um das Bisphosphonat zu immobilisieren, was die Herstellung wesentlich vereinfacht und kostengünstiger macht. Entsprechend kann die Beschichtung unmittelbar und ohne Zwischenschicht auf ein derartiges Dentalimplantat aufgebracht sein. Beim Dentalimplantat handelt es sich zum Beispiel um ein Dentalimplantat auf Basis von Calciumphosphat-Keramiken, Bioglass, Glaskeramiken, Calciumcarbonat, Calciumsulfat, organischen Polymeren oder Kompositen der genannten Materialien, oder auf Basis von Reintitan, Titanlegierungen, Kobalt-Chrom-Legierungen oder Edelstahl, oder auf Basis von nativen Elementen wie Kollagen, Gelatine oder Materialien allogener Herkunft.

Vorzugsweise verfügt die Beschichtung über eine Dicke im Bereich von 0.1-10 µm, vorzugsweise von 0.5-5 µm.

Des weiteren betrifft die vorliegende Erfindung ein Verfahren zur Herstellung eines Dentalimplantates, insbesondere von der Art, wie es oben beschrieben wurde. Dabei wird eine Suspension oder Lösung, welche sowohl ein Bisphosphonat der allgemeinen Formel, wie oben angegeben, als auch wenigstens eine amphiphile Komponente, wie oben angegeben, und/oder eine wasserlösliche ionische polymere Komponente, wie oben angegeben, enthält, hergestellt, und die Beschichtung wird durch Tauchen, Aufsprühen oder Auftropfen dieser Suspension oder Lösung (resp. des Suspensions- oder Lösemittelgemisches) auf die zu beschichtende Oberfläche des Dentalimplantates aufgebracht und nach Verdampfung oder Verdunstung des Suspensions- oder Lösemittels (bzw. Suspensions- oder Lösemittelgemischs) eine in Wasser gering lösliche Beschichtung gebildet.

Die Beschichtung kann dabei entweder dadurch hergestellt werden, dass in einem ersten Beschichtungsschritt eine Lösung z. B. eines Amino-Bisphosphonats in einem geeigneten Lösemittel durch Tauchen, Aufsprühen oder Auftropfen auf die zu beschichtende Oberfläche aufgebracht wird und nach Verdampfung oder Verdunstung des Lösemittels in einem zweiten Beschichtungsschritt eine amphiphile und/oder polymere Komponente in einem geeigneten Lösemittel durch Tauchen, Aufsprühen oder Auftropfen auf die zu beschichtende Oberfläche aufgebracht wird und nach Verdampfung oder Verdunstung des zweiten Lösemittels durch in situ Salzbildung eine in Wasser gering lösliche bisphosphonat-haltige Beschichtung gebildet wird.

Es ist aber auch möglich, die beiden Komponenten zunächst in einer wässrigen Lösung herzustellen, aus dieser auszufällen, und anschliessend gemeinsam mit einem geeigneten Lösemittel oder Suspensionsmittel mit den genannten Methoden aufzubringen. So kann beispielsweise das Bisphosphonat und die amphiphile Komponente und/oder die wasserlösliche ionische polymere Komponente hergestellt werden, indem in Wasser gelöstes Bisphosphonat mit in Wasser gelöster amphiphiler Komponente respektive wasserlöslicher ionischer polymerer Komponente vermischt werden und, gegebenenfalls nach Zugabe von weiteren Salzen, wie beispielsweise Kalziumchlorid, das Fällungsprodukt als Mischsalz isoliert wird, und anschliessend dieses Mischsalz in einem Suspensions- oder Lösemittel (z.B. org. Lösungsmittel wie Chloroform oder auch Wasser) oder Suspensions- oder Lösemittelgemisch aufgelöst respektive in diesem suspendiert werden. Das weitere Salz, welches zur Fällung verwendet wird, kann dabei z. B. in einem Verhältnis Bisphosphonat: weiteres Salz von im Bereich 1:2 bis 2:1 eingesetzt werden.

Die Trocknung der beschichteten Implantate kann durch ein bekanntes Trocknungsverfahren, also beispielsweise durch Trocknung im Gasstrom oder unter Anwendung von Unterdruck und/oder erhöhter Temperatur erfolgen. Erfindungsgemäss ist, dass das Aufbringen der beiden Lösungen auch in umgekehrter Reihenfolge durchgeführt werden kann. Bevorzugtermassen ist es zudem möglich, das Mischsalz auf ein aufgewärmtes Implantat, z.B. bei einer Temperatur des Implantats von mehr als 70 Grad Celsius, aufzubringen.

Erfindungsgemäss lassen sich mit den beschriebenen bisphosphonat-haltigen Zusammensetzungen nichtmetallische und metallische Dentalimplantatoberflächen beschichten. Im ersten Fall sind Materialien aus Aluminiumoxid-Zirkonoxid oder Mischungen dieser Keramiken und Polymere, besonders bevorzugt. Im zweiten Fall bestehen sie aus, in der Dentalmedizin üblichen, Reinmetallen oder Metalllegierungen wie beispielsweise Reintitan, Titanlegierungen, Kohalt-Chrom-Legierungen oder Edelstahl. Die Verwendung von Implantaten mit strukturierter Oberfläche ist besonders bevorzugt.

Gemäss einer bevorzugten Ausführungsform des erfindungsgemässen Verfahrens werden die Konzentrationen der Beschichtungslösungen die das Amino-Bisphosphosphonat und die amphiphile und/oder die polymere Komponente enthalten, so gewählt, dass in der durch in situ-Salzbildung entstehenden Beschichtung das

(Amino-) Bisphosphonat und die amphiphile Komponente respektive die polymere Komponente in einem Molverhältnis zwischen 10 : 1 und 1 : 5, bevorzugt zwischen 2:1 und 1:2, vorliegen.

Als Suspensions- oder Lösemittel oder Suspensions- oder Lösemittelgemisch können neben Wasser ein oder mehrere organische Suspensions- und/oder Lösungsmittel verwendet werden, so z.B. Chloroform als Suspensionsmittel oder eine Mischung aus Chloroform und Triethylenglykol im Verhältnis von 97.5 : 2.5 als Lösungsmittel.

Weiterhin betrifft die vorliegende Erfindung eine Bisphosphonat-haltige Zusammensetzung mit geringer Löslichkeit in wässrigem Milieu, in Form eines Mischsalzes. Diese Zusammensetzung enthält sowohl ein Amino-Bisphosphonat, als auch wenigstens eine amphiphile Komponente.

Dabei ist Y des Amino-Bisphosphonats eine lineare C1 - C7 Alkylgruppe substituiert durch NH₂, N(CH₃)₂, NH(CH₃), N(CH₃)₃, Pyridinyl oder Imidazolyl. Weiterhin ist die amphiphile Komponente ein lineares unsubstituiertes C10-C20 Alkyl-Carboxylat oder Alkyl-Sulfat.

Das Mischsalz verfügt dabei bevorzugternassen über eine Löslichkeit in reinem Wasser von weniger als 1 mg/ml bei Raumtemperatur, insbesondere bevorzugt von im Bereich von weniger als 0.05 - 0.9 mg/ml bei Raumtemperatur. Bevorzugt handelt es sich beim Bisphosphonat um Pamidronsäure, Alendronsäure, Neridronsäure, Riesedronsäure, Zoledronsäure, Olpadronsäure, Ibandronsäure, Minodronsäure oder Cimadronsäure oder eine Mischung und/oder Alkali- oder Erdalkali-Salze davon, wobei insbesondere Pamidronsäure und/oder Alendronsäure gegebenenfalls in Form des Alkali- oder Erdalkali-Salzes, bevorzugt wird, und dass insbesondere bevorzugt das Bisphosphonat in der freien Phosphonsäure-Form, der Natrium-, Kalium-, Ammonium-, Calcium-, Magnesium- und/oder Strontium-Salzform vorliegt. Weiterhin handelt es sich bei der amphiphilen Komponente um wenigstens eine Komponente ausgewählt aus der Gruppe der linearen unsubstituierten C8-C20 Alkyl-Carboxylate oder Alkyl-Sulfate respektive deren Alkali- oder Erdalkali-Salze, bevorzugt um Laurat, Stearat, Palmitat, Myristat, Oleat, Behenat, Dodecylsulfat bevorzugt als Alkali- oder Erdalkali-Salze oder Mischungen davon, respektive es handelt sich bei der wasserlöslichen ionischen polymeren Komponente um eine polymere Komponente mit freien anionischen Gruppen, welche sich von biologisch verträglichen Biopolymeren ableitet, wobei es sich bei der wasserlöslichen ionischen polymeren Komponente um carboxylierte, carboxymethylierte, sulfatierte oder phosphorylierte Derivate natürlicher Polysaccharide, insbesondere bevorzugt von Polysacchariden ausgewählt aus Dextran, Pullulans, Chitosan, Stärke oder Cellulose oder Mischungen davon.

Ausserdem trifft die vorliegende Erfindung eine Verwendung einer Zusammensetzung, wie sie oben beschrieben wurde, zur Beschichtung von nichtmetallischen (polymeren, keramischen o.ä.), metallischen oder nativen Dentalimplantatoberflächen, wobei die Dentalimplantatoberflächen glatt, strukturiert und/oder porös sein können.

Weitere bevorzugte Ausführungsformen der Erfindung ergeben sich aus den abhängigen Patentansprüchen.

### KURZE ERLÄUTERUNG DER FIGUR

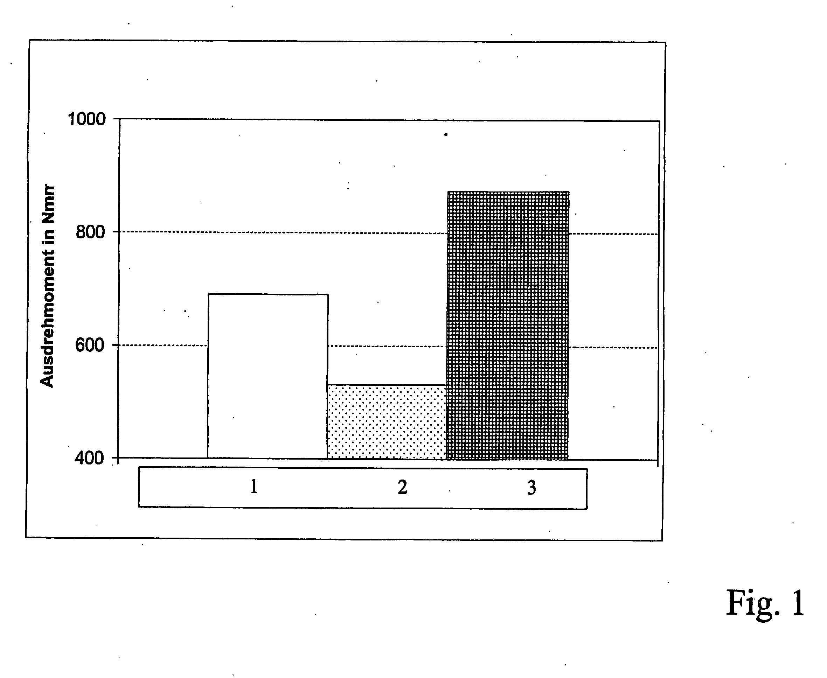

Die Erfindung soll nachfolgend anhand von Ausführungsbeispielen im Zusammenhang mit der Figur näher erläutert werden. Fig. 1 zeigt das Ausdrehmoment für Implantate mit unterschiedlichen Oberflächen.

### WEGE ZUR AUSFÜHRUNG DER ERFINDUNG

Die nachstehenden Beispiele dienen der näheren Erläuterung der Erfindung, ohne sie einzuschränken. Variationen der vorgestellten Ausführungsbeispiele, wie sie durch die nachfolgenden Patentansprüche umfasst werden, sind dem Fachmann im Rahmen seiner technischen Fachkenntnisse zugänglich, und entsprechend sollen die anfolgend gezeigten Ausführungsbeispiele nicht zur Einschränkung des durch die Patentansprüche verliehenen Schutzbereichs sondern nur zur Stützung ausgelegt werden.

### Herstellung eines Alendronsäure-Stearat-Salzes

100 mg (0,3076 mmol) Natrium-Alendronat werden in 10 ml Wasser bei 80°C gelöst und zu einer Lösung von 94,3 mg (0,3076 mmol) Natriumstearat in 5 ml Wasser (gelöst bei 80°C) gegeben. Die sich dabei bildende milchige Suspension wird über 18 Stunden bei 80°C unter inerten Bedingungen gerührt. Die Suspension wird anschliessend 10 min bei 14000 U/min zentrifugiert. Nach dem Abnehmen des Überstandes wird der Niederschlag mit destilliertem Wasser gewaschen und im Exsikkator unter Vakuum (10 mbar) bei Raumtemperatur mindestens 2 Tage getrocknet. Das Endprodukt wurde in einer Ausbeute von 30% erhalten.

### Herstellung eines Calcium-Pamidronat-Stearats

Es werden 20 mg (0,0717 mmol) Dinatriumpamidronat in 5 ml Wasser und 21,97 mg (0,0717 mmol) Natriumstearat in 5 ml Wasser bei jeweils 80°C gelöst. Die beiden klaren Lösungen werden gemischt und 30 min bei 80°C gerührt. Nach Zugabe von 1M Calciumchloridlösung (Verhältnis Pamidronat : Stearat : CaCl₂ =1 : 1 : 1) bildet sich eine milchig weisse Suspension, die 18 Stunden bei 80°C unter inerten Bedingungen gerührt wird. Anschliessend wird der Niederschlag zentrifugiert (14000 U/min; 10 min) und der Überstand entfernt Der verbleibende Niederschlag wird einmal mit destilliertem Wasser gewaschen. Das Endprodukt wird im Exsikkator unter Vakuum (10 mbar) mind. 2 Tage getrocknet. Das Calcium-Pamidronat-Stearat wird in einer Ausbeute von 69,3% erhalten.

### Herstellung von Alendronsäure-Dodecylsulfat

100 mg (0,3076 mmol) Natrium-Alendronat werden in 10 ml Wasser bei Raumtemperatur gelöst und zu einer Lösung von 88,7 mg (0,3076 mmol) Natriumdodecylsulfat (SDS) in 5 ml Wasser (gelöst bei RT) gegeben und 30 min bei Raumtemperatur gerührt. Nach Zugabe von 1M Calciumchlorid-Lösung im Verhältnis Alendronat : SDS : CaCl₂ =1 : 1 : 1 fällt ein weisser Niederschlag aus. Die Suspensionwird weitere 18 Stunden bei Raumtemperatur gerührt. Nach Zentrifugation (14000 U/min; 10 min) wird der klare Überstand entfernt und der Niederschlag mit destilliertem Wasser gewaschen. Das Endprodukt wird im Exsikkator unter Vakuum (10 mbar) bei Raumtemperatur mind. 2 Tage getrocknet. Die erzielte Ausbeute an Alendronsäure-Dodecylsulfat beträgt 88,4%.

### Herstellung eines Calcium-Alendronsäure-Carboxymethyldextran-Salzes

Es werden 50 mg (0,15378 mmol) Natrium-Alendronat (in 4 ml Wasser gelöst) mit 22,98 mg (0,1038 mmol) Carboxymethyldextran (CMD) mit einem Substitutionsgrad von 0,74, gelöst in 1 ml Wasser, gemischt und 30 min bei Raumtemperatur gerührt. Nach Zugabe von 1M Calciumchloridlösung im Verhältnis Alendronat : CMD : CaCl₂ = 2 : 1 : 2 bildete sich ein weisser, milchiger Niederschlag. Die Suspension wurde weitere 18 Stunden bei Raumtemperatur gerührt. Nach Zentrifugation (14000 U/min; 10 min) wird der klare Überstand abgenommen und der verbleibende Niederschlag mit destilliertem Wasser gewaschen. Das Endprodukt wird im Exsikkator unter Vakuum (10 mbar) bei Raumtemperatur mind. 2 Tage getrocknet. Das Verhältnis Alendronat zu CMD wurde von 2 : 1 bis 1 : 2 variiert. Die Ausbeuten der jeweiligen Ansätze betrugen 54,2% für 2 : 1, 44,8% für 1 : 1 und 12,2% für 1 : 2.

### Beschichtung von Dentalimplantaten

Ein Dentalimplantat auf Basis von Titan wurde zunächst in einem Sandstrahl- und Säureätzverfahren an der dem Knochen ausgesetzten Partie aufgeraut. Anschliessend wurde eine Suspension des oben hergestellten Alendronsäure-Stearat-Salzes in Chloroform durch Zugabe von 0,025g des Alendronsäure-Stearat-Salzes zu 4,975g Chloroform (3,3 ml) unter Rühren innerhalb von 10 min hergestellt. Durch Behandlung mit einem Ultraschall-Homogenisator (20 Watt Gesamtleistung) wurde eine homogene Suspension erhalten.

Die Dentalimplantate wurden auf 80°C erwärmt und mit der beschriebenen Suspension mehrfach mit einer konventionellen Sprühpistole (3x) besprüht. Während des Sprühvorgangs rotierten die in eine geeignete Vorrichtung eingespannten Implantate gleichmässig um ihre Längsachse. Zwischen den Aufsprühzyklen wurden die Dentalimplantate bei 80°C solange getrocknet, bis das Lösungsmittel vollständig verdampft war.

### Tierversuche

Die so hergestellten Implantate zeigten ein komplikationsloses Einwachsverhalten und eine im Vergleich zu den Dentalimplantaten nach dem Stand der Technik verbesserte Osseointegration. Weiterhin zeigt sich auch eine gute Integration an Weichgewebe (z. B. Zahnfleisch).

Die Figur 1 zeigt entsprechende Resultate von mit drei verschiedenen Oberflächenimplantattypen durchgeführten Versuchen. Dabei wurde ein Titanimplantat mit einem Durchmesser von 4.2 mm und einer Länge von 8 mm verwendet Die Oberflächen wurden bei Implantat (1) sandgestrahlt und säuregeätzt ohne weitere Beschichtung, bei Implantat (2) plasmachemisch anodisch oxidiert ohne weitere Beschichtung und bei Implantat (3) sandgestrahlt und säuregeätzt und mit einer Beschichtung im wesentlichen gemäss dem oben beschriebenen Beispiel zur Beschichtung von Implantaten beschichtet (vgl. oben: Kapitel Beschichtung von Dentalimplantaten) und dann die Implantate (1), (2) und (3) im Tierversuch verglichen. Die sandgestrahlt säuregeätzte und die plasmachemisch anodisch oxidierte Oberfläche entsprechen den Oberflächen von kommerziell verbreiteten und häufig verwendeten Dentalimplantaten.

Die Implantate wurden in die Beckenschaufel von Schafen implantiert. Nach einer Einheilzeit von 2 Wochen wurde das Ausdrehmoment in Nmm bestimmt, welches erforderlich war, um die eingewachsenen Implantate vom Knochen zu lösen. Wie Figur 1 zeigt, findet man ein signifikant besseres Einwachsen des erfindungsgemäss beschichteten Implantates (3).

## Patentansprüche

1. Dentalimplantat, welches wenigstens bereichsweise in im implantierten Zustand mit Hart- und/oder Weichgewebe wenigstens mittelbar in Kontakt befindlichen Oberflächenbereichen eine Beschichtung aufweist, welche sowohl ein Amino-Bisphosphonat der allgemeinen Formel
(H₂O₃P)-C(X)(Y)-(PO₃H₂) (I)
wobei
X ausgewählt ist aus H, OH, Cl, F oder einer Methylgruppe
Y eine lineare C1 - C7 Alkylgruppe substituiert durch NH₂, N(CH₃)₂, NH(CH₃), N(CH₃)₃, Pyridinyl oder Imidazolyl ist,
oder pharmazeutisch verträgliche Salze oder Ester davon, enthält,
als auch wenigstens eine
amphiphile Komponente in Form eines linearen unsubstituierten C10-C20 Alkyl-Carboxylates oder Alkyl-Sulfates ist oder eine Mischung davon,
und/oder eine wasserlösliche ionische polymere Komponente mit freien anionischen Gruppen in Form eines carboxylierten, carboxymethylierten, sulfatierten oder phosphorylierten Derivates natürlicher Polysaccharide,
wobei in der Beschichtung das Amino-Bisphosphonat und die amphiphile Komponente respektive das Bisphosphonat und die wasserlösliche ionische polymere Komponente als Mischsalz mit geringer Löslichkeit in Wasser, vorlegt, wobei die Beschichtung ohne zusätzlichen Träger respektive
zusätzlichen Carrier vorliegt.

2. Dentalimplantat nach Anspruch 1, **dadurch gekennzeichnet, dass** die Mischung respektive dass Mischsalz eine Löslichkeit in reinem Wasser von weniger als 1 mg/ml bei Raumtemperatur, insbesondere bevorzugt von im Bereich von weniger als 0.05 - 0.9 mg/ml bei Raumtemperatur aufweist

3. Dentalimplantat nach einem der vorhergehenden Ansprüche, **dadurch gekennzeichnet, dass** es sich beim Bisphosphonat um ein Amino-Bisphosphonat handelt, namentlich um Pamidronsäure, Alendronsäure, Neridronsäure, Riesedronsäure, Zoledronsäure, Olpadronsäure, Ibandronsäure, Minodronsäure oder Cimadronsäure oder eine Mischung und/oder Alkali- oder Erdalkali-Salze davon, wobei insbesondere Pamidronsäure und/oder Alendronsäure gegebenenfalls in Form des Alkali- oder Erdalkali-Salzes, bevorzugt wird.

4. Dentalimplantat nach einem der vorhergehenden Ansprüche, **dadurch gekennzeichnet, dass** das Amino-Bisphosphonat in der freien Phosphonsäure-Form, der Natrium-, Kalium-, Ammonium-, Calcium-, Magnesium- und/oder Strontium-Salzform vorliegt.

5. Dentalimplantat nach einem der vorhergehenden Ansprüche, **dadurch gekennzeichnet, dass** es sich bei der amphiphilen Komponente um Laurat, Stearat, Palmitat, Myristat, Oleat, Behenat, Dodecylsulfat bevorzugt als Alkali- oder Erdalkali-Salze oder Mischungen davon, handelt.

6. Dentalimplantat nach einem der vorhergehenden Ansprüche, **dadurch gekennzeichnet, dass** es sich beim natürlichen Polysaccharid der wasserlöslichen ionischen polymeren Komponente um ein Polysaccharid ausgewählt aus Dextran, Pullulans, Chitosan, Stärke oder Cellulose oder Mischungen davon handelt.

7. Dentalimplantat nach einem der vorhergehenden Ansprüche, **dadurch gekennzeichnet, dass** das Amino-Bisphosphonat und die amphiphile Komponente in der Beschichtung in einem Molverhältnis zwischen 10 : 1 und 1 : 5 vorliegen, insbesondere bevorzugt in einem Molverhältnis von 2:1 bis 1:2.

8. Dentalimplantat nach einem der vorhergehenden Ansprüche, **dadurch gekennzeichnet, dass** das Amino-Bisphosphonat und die wasserlösliche ionische polymere Komponente in der Beschichtung in einem Molverhältnis zwischen 10 : 1 und 1 : 5, insbesondere bevorzugt in einem Molverhältnis von 2:1 bis 1:2, jeweils bezogen auf die Aminogruppen des eingesetzten Amino-Bisphosphonats und die anionischen Gruppen der polymeren Komponente, vorliegen.

9. Dentalimplantat nach einem der vorhergehenden Ansprüche, **dadurch gekennzeichnet, dass** die Beschichtung auf einer glatten, porösen und/oder aufgerauten Oberfläche ohne Träger oder Carrier aufgebracht ist.

10. Dentalimplantat nach einem der vorhergehenden Ansprüche, **dadurch gekennzeichnet, dass** es sich um ein Dentalimplantat auf metallischer und/oder keramischer und/oder polymerer und/oder nativer Basis handelt, wobei insbesondere bevorzugt die Beschichtung unmittelbar und ohne Zwischenschicht auf ein derartiges Dentalimplantat aufgebracht ist, und wobei es sich bevorzugtermassen beim Dentalimplantat um Calciumphosphat-Keramiken, Bioglass, Glaskeramiken, Calciumcarbonat, Calciumsulfat, organische Polymeren oder Kompositen der genannten Materialien handelt, oder um Dentalimplantatoberflächen aus Reintitan, Titanlegierungen, Kobalt-Chrom-Legierungen oder Edelstahl, oder um native Dentalimplantatoberflächen, welche aus Kollagen, Gelatine oder Materialien allogener Herkunft bestehen.

11. Dentalimplantat nach einem der vorhergehenden Ansprüche, **dadurch gekennzeichnet, dass** die Beschichtung nach Einsetzen in das menschliche oder tierische Gewebe respektive in den menschlichen oder tierischen Knochen das Bisphosphonat in verzögerter Weise an die Umgebung abgibt.

12. Dentalimplantat nach einem der vorhergehenden Ansprüche, **dadurch gekennzeichnet, dass** die Beschichtung eine Dicke im Bereich von 0.1 - 10, vorzugsweise von 0.5 - 5 µm aufweist.

13. Dentalimplantat nach einem der vorhergehenden Ansprüche, **dadurch gekennzeichnet, dass** es sich um eine trockene, im wesentlichen lösungsmittelfreie und im wesentlichen wasserfreie Beschichtung handelt.

14. Dentalimplantat nach einem der vorhergehenden Ansprüche, **dadurch gekennzeichnet, dass** die amphiphile Komponente anionischen Charakter aufweist, wobei sie insbesondere bevorzugt eine einwertige oder zweiwertige negative Ladung aufweist.

15. Dentalimplantat nach einem der vorhergehenden Ansprüche, **dadurch gekennzeichnet, dass** die Beschichtung als Aufschlämmung oder Suspension in einem organischen Lösungsmittel bevorzugt in einem Sprüh- oder Tauchprozess aufgetragen und anschliessend vollständig getrocknet ist.

16. Verfahren zur Herstellung eines Dentalimplantates nach einem der vorhergehenden Ansprüche, **dadurch gekennzeichnet, dass** eine Suspension oder Lösung oder ein Suspensions- oder Lösemittelgemisch hergestellt wird, welches sowohl ein Amino-Bisphosphonat der allgemeinen Formel
(H₂O₃P)-C(X)(Y)-(PO₃H₂) (I)
wobei
X ausgewählt ist aus H, OH, Cl, F oder einer Methylgruppe
Y eine lineare C1 - C7 Alkylgruppe substituiert durch NH₂, N(CH₃)₂, NH(CH₃), N(CH₃)₃, Pyridinyl oder Imidazolyl ist,
oder pharmazeutisch verträgliche Salze oder Ester davon,
als auch wenigstens eine
amphiphile Komponente in Form eines linearen unsubstituierten C10-C20 Alkyl-Carboxylates oder Alkyl-Sulfates ist oder eine Mischung davon,
und/oder eine wasserlösliche ionische polymere Komponente mit freien anionischen Gruppen in Form eines carboxylierten, carboxymethylierten, sulfatierten oder phosphorylierten Derivates natürlicher Polysaccharide,
enthält, und die Beschichtung durch Tauchen, Aufsprühen oder Auftropfen dieser Suspension oder Lösung oder des Suspensions- oder Lösemittelgemisches auf die zu beschichtende Oberfläche des Dentalimplantates aufgebracht wird und nach Verdampfung oder Verdunstung des Suspensions- oder Lösemittels bzw. Suspensions- oder Lösemittelgemischs eine in Wasser gering lösliche amino-bisphosphonat-haltige Beschichtung gebildet wird.

17. Verfahren nach Anspruch 16, **dadurch gekennzeichnet, dass** in einem ersten Beschichtungsschritt eine Lösung eines Amino-Bisphosphonats in einem geeigneten Lösemittel durch Tauchen, Aufsprühen oder Auftropfen auf die zu beschichtende Oberfläche aufgebracht wird und nach Verdampfung oder Verdunstung des Lösemittels in einem zweiten Beschichtungsschritt die amphiphile und/oder polymere Komponente in einem geeigneten Lösemittel durch Tauchen, Aufsprühen oder Auftropfen auf die zuvor beschichtende Oberfläche aufgebracht wird und nach Verdampfung oder Verdunstung des zweiten Lösemittels durch in situ Salzbildung eine in Wasser gering lösliche bisphosphonat-haltige Beschichtung gebildet wird.

18. Verfahren nach einem der Ansprüche 16 oder 17, **dadurch gekennzeichnet, dass** die Konzentrationen der Beschichtungslösungen die das Amino-Bisphosphosphonat und die amphiphile und/oder die polymere Komponente enthalten, so gewählt werden, dass in der durch in situ-Salzbildung entstehenden Beschichtung das Amino-Bisphosphonat und die amphiphile Komponente in einem Molverhältnis zwischen 10 : 1 und 1 : 5, bevorzugt zwischen 2:1 und 1:2, vorliegen.

19. Verfahren nach einem der Ansprüche 16-18, **dadurch gekennzeichnet, dass** das Bisphosphonat und die amphiphile Komponente und/oder die wasserlösliche ionische polymere Komponente hergestellt werden, indem in Wasser gelöstes Bisphosphonat mit in Wasser gelöster amphiphiler Komponente respektive wasserlöslicher ionischer polymerer Komponente vermischt werden und, gegebenenfalls nach Zugabe von weiteren Salzen, wie beispielsweise Kalziumchlorid, das Fällungsprodukt als Mischsalz isoliert werden, und anschliessend dieses Mischsalz in einem Suspensions- oder Lösemittel oder Suspensions- oder Lösemittelgemisch aufgelöst respektive in diesem suspendiert werden.

20. Verfahren nach einem der Ansprüche 16-19, **dadurch gekennzeichnet, dass** als Suspensions- oder Lösemittel oder Suspensions- oder Lösemittelgemisch, Wasser oder ein oder mehrere organische Suspensions- und/oder Lösungsmittel verwendet werden, so z.B. Chloroform als Suspensionsmittel oder eine Mischung aus Chloroform und Triethylenglykol bevorzugt im Verhältnis von 97.5 : 2.5 als Lösungsmittel.

21. Verfahren nach einem der Ansprüche 16-20, **dadurch gekennzeichnet, dass** die Beschichtung als Aufschlämmung oder Suspension in einem organischen Lösungsmittel bevorzugt in einem Sprüh- oder Tauchprozess aufgetragen und anschliessend vollständig getrocknet wird.

22. Bisphosphonat-haltige Zusammensetzung mit geringer Löslichkeit in wässrigem Milieu, in Form eines ein Mischsalzes, welches sowohl ein Amino-Bisphosphonat der allgemeinen Formel
(H₂O₃P)-C(X)M-(PO₃H₂) (I)
wobei
X ausgewählt ist aus H, OH, Cl, F oder einer Methylgruppe
Y eine lineare Cl - C7 Alkylgruppe substituiert durch NH₂, N(CH₃)₂, NH(CH₃), N(CH₃)₃, Pyridinyl oder Imidazolyl ist,
oder pharmazeutisch verträgliche Salze oder Ester davon,
als auch wenigstens eine amphiphile Komponente in Form eines linearen unsubstituierten C10-C20 Alkyl-Carboxylates oder Alkyl-Sulfates ist oder eine Mischung davon,
und/oder eine wasserlösliche ionische polymere Komponente mit freien anionischen Gruppen in Form eines carboxylierten, carboxymethylierten, sulfatierten oder phosphorylierten Derivates natürlicher Polysaccharide,
enthält.

23. Zusammensetzung nach Anspruch 22, **dadurch gekennzeichnet, dass** das Mischsalz ein Löslichkeit in reinem Wasser von weniger als 1 mg/ml bei Raumtemperatur, insbesondere bevorzugt von im Bereich von weniger als 0.05 - 0.9 mg/ml bei Raumtemperatur aufweist.

24. Zusammensetzung nach einem der Ansprüche 22 oder 23, **dadurch gekennzeichnet, dass** es sich beim Amino-Bisphosphonat um Pamidronsäure, Alendronsäure, Neridronsäure, Riesedronsäure, Zoledronsäure, Olpadronsäure, Ibandronsäure, Minodronsäure oder Cimadronsäure oder eine Mischung und/oder Alkali- oder Erdalkali-Salze davon, wobei insbesondere Pamidronsäure und/oder Alendronsäure gegebenenfalls in Form des Alkali- oder Erdalkali-Salzes, bevorzugt wird, und dass insbesondere bevorzugt das Bisphosphonat in der freien Phosphonsäure-Form, der Natrium-, Kalium-, Ammonium-, Calcium-, Magnesium- und/oder Strontium-Salzform vorliegt

25. Zusammensetzung nach einem der Ansprüche 22-24, **dadurch gekennzeichnet, dass** es sich bei der amphiphilen Komponente um Laurat, Stearat, Palmitat, Myristat, Oleat, Behenat Dodecylsulfat bevorzugt als Alkali- oder Erdalkali-Salze oder Mischungen davon, respektive dass es sich bei der wasserlöslichen ionischen polymeren Komponente um Derivate von Polysacchariden ausgewählt aus Dextran, Pullulans, Chitosan, Stärke oder Cellulose oder Mischungen davon handelt.

26. Verwendung einer Zusammensetzung nach einem der Ansprüche 22-25 zur Beschichtung von nichtmetallischen, metallischen oder nativen Dentalimplantatoberflächen, wobei die Dentalimplantatoberflächen insbesondere bevorzugt glatt, strukturiert und/oder porös sind.

## Claims

1. Dental implant, which comprises a coating at least in surface areas which are at least in indirect contact with hard and/or soft tissue when implanted, which coating comprises an amino-bisphosphonate of the general formula
(H₂O₃P)-C(X)(Y)-(PO₃H₂) (I)
wherein
X is selected from H, OH, Cl, F, or a methyl group
Y is a linear C1-C7 alkyl group substituted by NH₂, N(CH₃)₂, NH(CH₃), N(CH₃)₃, pyridinyl or imidazolyl,
or pharmaceutically compatible salts or esters thereof,
in addition to at least an
amphiphilic component is in form of a linear unsubstituted C10-C20 alkyl-carboxylate or alkyl-sulfate or a mixture thereof,
and/or a water-soluble ionic polymeric component with free anionic groups in form of a carboxylated, carboxymethylated, sulphated, or phosphorylated derivate of natural polysaccharides,
wherein in the coating the amino-bisphosphonate and the amphiphilic component or the bisphosphonate and the water-soluble ionic polymeric component, respectively, is present as a composite salt of low solubility in water, wherein the coating is present without additional support or additional carrier, respectively.

2. Dental implant according to claim 1, **characterized in that** the mixture or the composite salt, respectively, has a solubility in pure water of less than 1 mg/ml at room temperature, preferably of in the range of from less than 0.05-0.9 mg/ml at room temperature.

3. Dental implant according to one of the preceding claims, **characterized in that** the bisphosphonate is an amino-bisphosphonate, namely pamidronic acid, alendronic acid, neridronic acid, risedronic acid, zoledronic acid, olpadronic acid, ibandronic acid, minodronic acid, or cimadronic acid, or a mixture and/or alkali- or earth alkali-salts thereof, wherein especially pamidronic acid and/or alendronic acid, possibly in the form of the alkali- or earth alkali-salt is preferred.

4. Dental implant according to one of the preceding claims, **characterized in that** the amino-bisphosphonate is present in the free phosphonic acid form, the sodium-, potassium-, ammonium-, calcium-, magnesium-, and/or strontium-salt form.

5. Dental implant according to one of the preceding claims, **characterized in that** the amphiphilic component is laurate, stearate, palmitate, myristate, oleate, behanate, dodecylsulfate, preferably as alkali- or earth alkali-salts or mixtures thereof.

6. Dental implant according to one of the preceding claims, **characterized in that** the natural polysaccharide of the water-soluble ionic polymeric component is a polysaccharide selected from dextran, pullulans, chitosan, starch or cellulose, or mixtures thereof.

7. Dental implant according to one of the preceding claims, **characterized in that** the amino-bisphosphonate and the amphiphilic component are present in the coating in a molar ratio between 10:1 and 1:5, preferably in a molar ratio from 2:1 to 1:2.

8. Dental implant according to one of the preceding claims, **characterized in that** the amino-bisphosphonate and the water-soluble ionic polymeric component are present in the coating in a molar ratio between 10:1 and 1:5, preferably in a molar ratio from 2:1 to 1:2, each with respect to the amino groups of the amino-bisphosphonate used and the anionic groups of the polymeric component.

9. Dental implant according to one of the preceding claims, **characterized in that** the coating is applied to an even, porous and/or roughened surface without a support or carrier.

10. Dental implant according to one of the preceding claims, **characterized in that** it concerns a dental implant of a metallic and/or ceramic and/or polymeric and/or native basis, wherein preferably the coating is applied to such a dental implant directly and without an intermediate layer, and wherein the dental implant preferably is calcium phosphate ceramics, bioglass, glass ceramics, calcium carbonate, calcium sulphate, organic polymers, or composites of said materials, or dental implant surfaces of pure titanium, titanium alloys, cobalt-chromium alloys, or stainless steel, or native dental implant surfaces, which are composed of collagen, gelatine, or materials of allogenic origin.

11. Dental implant according to one of the preceding claims, **characterized in that** after introduction into the human or animal tissue, or the human or animal bone, respectively, the coating releases the bisphosphonate in a delayed manner into the environment.

12. Dental implant according to one of the preceding claims, **characterized in that** the coating has a thickness in the range of 0.1-10, preferably of 0.5-5 µm.

13. Dental implant according to one of the preceding claims, **characterized in that** it concerns a dry, essentially solvent-free, and essentially water-free coating.

14. Dental implant according to one of the preceding claims, **characterized in that** the amphiphilic component has anionic character, wherein it preferably has a monovalent or bivalent negative charge.

15. Dental implant according to one of the preceding claims, **characterized in that** the coating is applied as a slurry or suspension in an organic solvent, preferably in a spraying- or dipping process and subsequently completely dried.

16. Method for producing a dental implant according to one of the preceding claims, **characterized in that** a suspension or solution or a suspension- or solvent-mixture is produced, which contains an amino-bisphosphonate of the general formula
(H₂O₃P)-C(X)(Y)-(PO₃H₂) (I)
wherein
X is selected from H, OH, Cl, F, or a methyl group
Y is a linear C1-C7 alkyl group substituted by NH₂, N(CH₃)₂, NH(CH₃), N(CH₃)₃, pyridinyl or imidazolyl,
or pharmaceutically compatible salts or esters thereof,
in addition to at least an
amphiphilic component is in form of a linear unsubstituted C10-C20 alkyl-carboxylate or alkyl-sulfate or a mixture thereof,
and/or a water-soluble ionic polymeric component with free anionic groups in form of a carboxylated, carboxymethylated, sulphated, or phosphorylated derivate of natural polysaccharides,
and the coating is applied to the dental implant surface to be coated by dipping, spraying, or dripping of this suspension or solution or the suspension- or solvent-mixture and that after volatilization or evaporation of the suspension or solution or the suspension- or solvent-mixture, respectively, an amino-bisphosphonate-containing coating is formed which has a low solubility in water.

17. Method according to claim 16, **characterized in that** in a first coating step a solution of an amino-bisphosphonate in a suitable solvent is applied to the surface to be coated by dipping, spraying, or dripping, and that after volatilization or evaporation of the solvent in a second coating step a amphiphilic and/or polymeric component in a suitable solvent is applied to the previously coated surface by dipping, spraying, or dripping, and after volatilization or evaporation of the second solvent a bisphosphonate-containing coating, which has a low solubility in water, is formed by in situ salt formation.

18. Method according to one of claims 16 or 17, **characterized in that** the concentrations of the coating solutions containing the amino-bisphosphonate and the amphiphilic and/or the polymeric component are chosen such that in the coating formed by in situ-salt formation the amino bisphosphonate and the amphiphilic component are present in a molar ratio between 10:1 and 1:5, preferably between 2:1 and 1:2.

19. Method according to one of claims 16-18, **characterized in that** the bisphosphonate and the amphiphilic component and/or the water-soluble ionic polymeric component are produced by mixing bisphosphonate solubilized in water with amphiphilic component solved in water or water-soluble ionic polymeric component, respectively, and, possibly after the addition of further salts, as for example calcium chloride, the precipitation product is isolated as a composite salt, and subsequently this composite salt is solubilized in a suspension means or solvent or a suspension- or solvent mixture or suspended therein, respectively.

20. Method according to one of claims 16-19, **characterized in that** water or one or more organic suspension means and/or solvents are used as suspension means or solvents or suspension- or solvent mixtures, such as e.g. chloroform as a suspension means or a mixture of chloroform and triethyleneglycol preferably in the ratio of 97.5:2.5 as a solvent.

21. Method according to one of claims 16-20, **characterized in that** the coating is applied as a slurry or suspension in an organic solvent, preferably in a spraying- or dipping process and subsequently completely dried.

22. Bisphosphonate-containing composition of a low solubility in an aqueous environment, in the form of a composite salt, which contains an amino-bisphosphonate of the general formula
(H₂O₃P)-C(X)(Y)-(PO₃H₂) (I)
wherein
X is selected from H, OH, Cl, F, or a methyl group
Y is a linear C1-C7 alkyl group substituted by NH₂, N(CH₃)₂, NH(CH₃), N(CH₃)₃, pyridinyl or imidazolyl,
or pharmaceutically compatible salts or esters thereof,
in addition to at least an amphiphilic component is in form of a linear unsubstituted C10-C20 alkyl-carboxylate or alkyl-sulfate or a mixture thereof,
and/or a water-soluble ionic polymeric component with free anionic groups in form of a carboxylated, carboxymethylated, sulphated, or phosphorylated derivate of natural polysaccharides.

23. Composition according to claim 22, **characterized in that** the composite salt has a solubility in pure water of less than 1 mg/ml at room temperature, preferably of in the range of less than 0.05-0.9 mg/ml at room temperature.

24. Composition according to one of claims 22 or 23, **characterized in that** the amino-bisphosphonate is pamidronic acid, alendronic acid, neridronic acid, risedronic acid, zoledronic acid, olpadronic acid, ibandronic acid, minodronic acid, or cimadronic acid, or a mixture and/or alkali- or earth alkali salts thereof, wherein pamidronic acid and/or alendronic acid, possibly in the form of the alkali- or earth alkali salt, is preferred, and that preferably the bisphosphonate is present in the free phosphonic acid form, the sodium-, potassium-, ammonium-, calcium-, magnesium-, and/or strontium salt form.

25. Composition according to one of claims 22-24, **characterized in that** the amphiphilic component is laurate, stearate, palmitate, myristate, oleate, behenate, dodecylsulfate, preferably as alkali- or earth alkali salts or mixtures thereof, or that the water-soluble ionic polymeric component are derivates of polysaccharides selected from dextran, pullulans, chitosan, starch or cellulose, or mixtures thereof.

26. Use of a composition according to one of claims 22-25 for the coating of non-metallic, metallic, or native dental implant surfaces, wherein the dental implant surfaces preferably are even, structured, and/or porous.

## Revendications

1. Implant dentaire, qui présente au moins par zones, dans des zones superficielles qui, à l'état implanté, sont au moins indirectement en contact avec des tissus durs et/ou mous, un revêtement, qui contient un aminobiphosphonate de formule générale
(H₂O₃P)-C(X) (Y)-(PO₃H₂) (I)
où
X est choisi parmi H, OH, Cl, F ou un groupe méthyle
Y représente un groupe C₁-C₇-alkyle linéaire substitué par NH₂,N(CH₃)₂,NH(CH₃), N(CH₃)₃, pyridinyle ou imidazolyle,
ou des sels ou des esters pharmaceutiquement acceptables de celui-ci, ainsi qu'au moins un composant amphiphile sous forme d'un carboxylate de C₁₀-C₂₀-alkyle non substitué, linéaire ou d'un alkylsulfate ou un mélange de ceux-ci et/ou un composant polymère ionique soluble dans l'eau présentant des groupes anioniques libres sous forme d'un dérivé carboxylé, carboxyméthylé, sulfaté ou phosphorylé de polysaccharides naturels, où l'aminophosphonate et le composant amphiphile ou selon le cas le biphosphonate et le composant polymère ionique soluble dans l'eau se trouvent dans le revêtement sous forme de sel mixte présentant une faible solubilité dans l'eau, le revêtement se trouvant sans support supplémentaire.

2. Implant dentaire selon la revendication 1, **caractérisé en ce que** le mélange ou, selon le cas, le sel mixte présente une solubilité dans l'eau pure inférieure à 1 mg/ml à température ambiante, en particulier de préférence dans la plage de moins de 0,05-0,9 mg/ml à température ambiante.

3. Implant dentaire selon l'une quelconque des revendications précédentes, **caractérisé en ce qu'**il s'agit, pour le biphosphonate, d'un aminobiphosphonate, à savoir l'acide pamidronique, l'acide alendronique, l'acide néridronique, l'acide risédronique, l'acide zolendronique, l'acide olpadronique, l'acide ibandronique, l'acide minodronique ou l'acide cimadronique ou un mélange et/ou de sels de métal alcalin ou de métal alcalino-terreux de ceux-ci, en préférant en particulier l'acide pamidronique et/ou l'acide alendronique, le cas échéant sous forme de sel de métal alcalin ou alcalino-terreux.

4. Implant dentaire selon l'une quelconque des revendications précédentes, **caractérisé en ce que** l'aminobiphosphonate se trouve sous forme de l'acide phosphonique libre, sous forme de sel de sodium, de potassium, d'ammonium, de calcium, de magnésium et/ou de strontium.

5. Implant dentaire selon l'une quelconque des revendications précédentes, **caractérisé en ce qu'**il s'agit, pour le composant amphiphile, de laurate, de stéarate, de palmitate, de myristate, d'oléate, de béhénate, de dodécylsulfate, de préférence sous forme de sels de métal alcalin ou de métal alcalino-terreux ou de mélanges de ceux-ci.

6. Implant dentaire selon l'une quelconque des revendications précédentes, **caractérisé en ce qu'**il s'agit, pour le polysaccharide naturel du composant polymère ionique soluble dans l'eau, d'un polysaccharide choisi parmi le dextran, le pullulane, le chitosane, l'amidon ou la cellulose ou de mélanges de ceux-ci.

7. Implant dentaire selon l'une quelconque des revendications précédentes, **caractérisé en ce que** l'aminobiphosphonate et le composant amphiphile se trouvent dans le revêtement dans un rapport molaire entre 10:1 et 1:5, en particulier de préférence dans un rapport molaire de 2:1 à 1:2.

8. Implant dentaire selon l'une quelconque des revendications précédentes, **caractérisé en ce que** l'aminobiphosphonate et le composant polymère ionique soluble dans l'eau se trouvent dans le revêtement dans un rapport molaire entre 10:1 et 1:5, en particulier de préférence dans un rapport molaire de 2:1 à 1:2, à chaque fois par rapport aux groupes amino de l'aminobiphosphonate utilisé et aux groupes anioniques du composant polymère.

9. Implant dentaire selon l'une quelconque des revendications précédentes, **caractérisé en ce que** le revêtement est appliqué sur une surface lisse, poreuse et/ou rendue rugueuse, sans support.

10. Implant dentaire selon l'une quelconque des revendications précédentes, **caractérisé en ce qu'**il s'agit d'un implant dentaire à base métallique et/ou céramique et/ou polymère et/ou naturelle, où le revêtement est appliqué en particulier de préférence directement et sans couche intermédiaire sur un tel implant dentaire et où il s'agit de préférence, pour l'implant dentaire, de céramiques en phosphate de calcium, de bioverre, de céramiques de verre, de carbonate de calcium, de sulfate de calcium, de polymères organiques ou de composites des matériaux mentionnés, ou de surfaces d'implant dentaire en titane pur, en alliages de titane, en alliages de cobalt-chrome ou en acier noble, ou de surfaces d'implant dentaire naturel, qui sont en collagène, en gélatine ou en matériau d'origine allogène.

11. Implant dentaire selon l'une quelconque des revendications précédentes, **caractérisé en ce que** le revêtement libère le biphosphonate après l'implantation dans le tissu humain ou animal ou, selon le cas, dans l'os humain ou animal, de manière retardée dans l'environnement.

12. Implant dentaire selon l'une quelconque des revendications précédentes, **caractérisé en ce que** le revêtement présente une épaisseur dans la plage de 0,1-10, de préférence de 0,5-5 µm.

13. Implant dentaire selon l'une quelconque des revendications précédentes, **caractérisé en ce qu'**il s'agit d'un revêtement sec, essentiellement exempt de solvant et essentiellement exempt d'eau.

14. Implant dentaire selon l'une quelconque des revendications précédentes, **caractérisé en ce que** le composant amphiphile présente un caractère anionique, en présentant en particulier de préférence une charge négative monovalente ou divalente.

15. Implant dentaire selon l'une quelconque des revendications précédentes, **caractérisé en ce que** le revêtement est appliqué sous forme de suspension, de préférence dans un solvant organique, de préférence dans un procédé par pulvérisation ou par immersion, puis complètement séché.

16. Procédé pour la réalisation d'un implant dentaire selon l'une quelconque des revendications précédentes, **caractérisé en ce qu'**on prépare une suspension ou une solution ou un mélange d'agents de mise en suspension ou de solvants, qui contient un aminobiphosphonate de formule générale
(H₂O₃P)-C(X) (Y) - (P₃H₂) (I)
où
X est choisi parmi H, OH, Cl, F ou un groupe méthyle
Y représente un groupe C₁-C₇-alkyle linéaire substitué par NH₂, N(CH₃)₂, NH(CH₃), N(CH₃)₃, pyridinyle ou imidazolyle,
ou des sels ou des esters pharmaceutiquement acceptables de celui-ci, ainsi qu'au moins un composant amphiphile sous forme d'un carboxylate de C₁₀-C₂₀-alkyle non substitué, linéaire ou d'un alkylsulfate ou un mélange de ceux-ci et/ou un composant polymère ionique soluble dans l'eau avec des groupes anioniques libres sous forme d'un dérivé carboxylé, carboxyméthylé, sulfaté ou phosphorylé de polysaccharides naturels, et le revêtement est appliqué par immersion, pulvérisation ou aspersion de gouttes de cette suspension ou de cette solution ou du mélange d'agents de mise en suspension ou de solvants sur la surface à revêtir de l'implant dentaire et un revêtement contenant de l'aminobiphosphonate peu soluble dans l'eau est formé après évaporation ou vaporisation de l'agent de mise en suspension ou du solvant ou du mélange d'agents de mise en suspension ou de solvants.

17. Procédé selon la revendication 16, **caractérisé en ce qu'**on applique, dans une première étape de revêtement, une solution d'un aminobiphosphonate dans un solvant approprié par immersion, pulvérisation ou aspersion de gouttes sur la surface à revêtir, puis, après évaporation ou vaporisation du solvant, on applique dans une deuxième étape de revêtement, le composant amphiphile et/ou polymère dans un solvant approprié par immersion, pulvérisation ou aspersion de gouttes sur la surface revêtue au préalable et, après évaporation ou vaporisation du deuxième solvant, un revêtement contenant du biphosphonate, peu soluble dans l'eau se forme par formation de sel in situ.

18. Procédé selon l'une quelconque des revendications 16 ou 17, **caractérisé en ce que** les concentrations des solutions de revêtement qui contiennent l'aminobiphosphonate et le composant amphiphile et/ou polymère sont choisies de manière telle que dans le revêtement formé par formation de sel in situ, l'aminobiphosphonate et le composant amphiphile se trouvent dans un rapport molaire entre 10:1 et 1:5, de préférence entre 2:1 et 1:2.

19. Procédé selon l'une quelconque des revendications 16 à 18, **caractérisé en ce que** le biphosphonate et le composant amphiphile et/ou le composant polymère ionique soluble dans l'eau sont préparés **en ce que** du biphosphonate dissous dans l'eau est mélangé avec du composant amphiphile dissous dans l'eau ou selon le cas avec du composant polymère ionique soluble dans l'eau et, le cas échéant après addition d'autres sels, tels que par exemple le chlorure de calcium, le produit précipité est isolé sous forme de sel mixte, puis ce sel mixte est dissous ou, selon le cas, mis en suspension dans un agent de mise en suspension ou un solvant ou un mélange d'agents de mise en suspension ou de solvants.

20. Procédé selon l'une quelconque des revendications 16 à 19, **caractérisé en ce qu'**on utilise comme agent de mise en suspension ou solvant ou mélange d'agents de mise en suspension ou de solvants, de l'eau ou un ou plusieurs agents de mise en suspension et/ou solvants organiques, tels que par exemple du chloroforme comme agents de mise en suspension ou un mélange de chloroforme et de triéthylèneglycol de préférence dans un rapport de 97,5:2,5 comme solvant.

21. Procédé selon l'une quelconque des revendications 16 à 20, **caractérisé en ce que** le revêtement est appliqué sous forme de suspension dans un solvant organique, de préférence dans un procédé par pulvérisation ou par immersion, puis complètement séché.

22. Composition contenant du biphosphonate présentant une faible solubilité en milieu aqueux, sous forme d'un sel mixte, qui contient un aminobiphosphonate de formule générale
(H₂O₃P)-C(X) (Y)-(PO₃H₂) (I)
où
X est choisi parmi H, OH, Cl, F ou un groupe méthyle
Y représente un groupe C₁-C₇-alkyle linéaire substitué par NH₂, N(CH₃)₂, NH(CH₃), N(CH₃)₃, pyridinyle ou imidazolyle,
ou des sels ou des esters pharmaceutiquement acceptables de celui-ci, ainsi qu'au moins un composant amphiphile sous forme d'un carboxylate de C₁₀-C₂₀-alkyle non substitué, linéaire ou d'un alkylsulfate ou un mélange de ceux-ci et/ou un composant polymère ionique soluble dans l'eau avec des groupes anioniques libres sous forme d'un dérivé carboxylé, carboxyméthylé, sulfaté ou phosphorylé de polysaccharides naturels.

23. Composition selon la revendication 22, **caractérisée en ce que** le sel mixte présente une solubilité dans l'eau pure inférieure à 1 mg/ml à température ambiante, en particulier de préférence dans la plage de moins de 0,05-0,9 mg/ml à température ambiante.

24. Composition selon l'une quelconque des revendications 22 ou 23, **caractérisée en ce qu'**il s'agit, pour l'aminobiphosphonate, d'acide pamidronique, d'acide alendronique, d'acide néridronique, d'acide risédronique, d'acide zolendronique, d'acide olpadronique, d'acide ibandronique, d'acide minodronique ou d'acide cimadronique ou d'un mélange et/ou de sels de métal alcalin ou de métal alcalino-terreux de ceux-ci, en préférant en particulier l'acide pamidronique et/ou l'acide alendronique, le cas échéant sous forme de sel de métal alcalin ou alcalino-terreux et **en ce qu'**en particulier de préférence le biphosphonate se trouve sous forme d'acide phosphonique libre, du sel de sodium, de potassium, d'ammonium, de calcium, de magnésium et/ou de strontium.

25. Composition selon l'une quelconque des revendications 22 à 24, **caractérisée en ce qu'**il s'agit, pour le composant amphiphile, de laurate, de stéarate, de palmitate, de myristate, d'oléate, de béhénate, de dodécylsulfate, de préférence sous forme de sels de métal alcalin ou de métal alcalino-terreux ou de mélanges de ceux-ci ou, selon le cas, **en ce qu'**il s'agit, pour le composant polymère ionique soluble dans l'eau, de dérivés de polysaccharides choisis parmi le dextran, le pullulane, le chitosane, l'amidon ou la cellulose ou leurs mélanges.

26. Utilisation d'une composition selon l'une quelconque des revendications 22 à 25 pour le revêtement de surfaces d'implant dentaire non métalliques, métalliques ou naturelles, les surfaces d'implant dentaire étant en particulier de préférence lisses, structurées et/ou poreuses.
